# EUROPEAN PATENT APPLICATION

(11) **EP 4 811 516 A1**
(43) Date of publication of application: **23.09.2026**
(21) Application number: 25824214.8
(22) Date of filing: 30.06.2025
(51) Int. Cl.: H01M 50/24, H01M 10/04, C09D 5/18

(54) **BATTERY MODULE AND BATTERY PACK INCLUDING SAME**

(30) Priority: 27.09.2024 KR 20240131302
(71) Applicant: LG ENERGY SOLUTION, LTD., Seoul 07335 (KR)
(72) Inventor: UHM, Jae Yong, Yuseong-gu, Daejeon 34122 (KR)
(74) Representative: Plasseraud IP
(86) International application number: PCT/KR2025/009172
(87) International publication number: WO 2026/071406

(57) **Abstract**

A battery module including a cell assembly having a plurality of the battery cells, a connector connected to the cell assembly, a terminal connected to the connector, and a main body frame accommodating the cell assembly. The main body frame includes first and second sides located at longitudinal opposite ends of the main body and an opening portion located on at least one of the first and second sides. An end frame is coupled to the opening portion. The end frame has an open area configured such that the terminal and the connector are partially exposed outward. A foamable intumescent coating is located on a surface of the end frame and is configured to foam due to heat when a flame reaches the open area during a thermal runaway of at least one of the plurality of battery cells to close the open area by the foam.

## Description

### [TECHNICAL FIELD]

The present disclosure relates to a battery module and a battery pack including the same, and more particularly, relates to a battery module and a battery pack including the same for preventing a thermal runaway of a pouch cell inside the battery module from being transited to an adjacent battery module when the pouch cell experiences the thermal runaway and a flame is ejected to the vicinity of a terminal or to the vicinity of a connector which is an open area.

### [BACKGROUND ART]

As demands for portable electronic products such as smartphones, laptops, and wearable devices have rapidly increased and robots and electric vehicles have more widely been commercialized, researches have actively been conducted on high-performance secondary batteries capable of repeated charging and discharging.

Currently commercialized secondary batteries include nickel-cadmium batteries, nickel-metal hydride batteries, nickel-zinc batteries, and lithium secondary batteries.

Among these batteries, in the lithium secondary batteries, there is almost no memory effect, compared to nickel-based secondary batteries. Therefore, the lithium secondary batteries have received attention owing to advantages in that charging and discharging are freely available, a self-discharge rate is very low, and energy density is high.

In many cases, the lithium secondary batteries mainly use lithium oxide and carbon materials as positive active materials and negative active materials, respectively.

The lithium secondary batteries include an electrode assembly in which a positive electrode and a negative electrode plate, each of which is coated with the positive active material and the negative active material, are arranged across a separator, and an exterior material, that is, a battery case, which seals and stores the electrode assembly together with an electrolyte.

In general, depending on shapes of the exterior material, the lithium secondary batteries may be classified into a can-type secondary battery in which the electrode assembly is built into a metal can, and a pouch-type secondary battery in which the electrode assembly is built into a pouch of an aluminum laminate sheet.

Recently, secondary batteries have widely been used for driving or storing energy in not only small devices such as portable electronic devices, but also medium and large apparatuses such as electric vehicles and energy storage systems (ESS).

These secondary batteries (battery cells) may form one battery module in a form of being accommodated together inside a module case in a state where multiple secondary batteries are electrically connected.

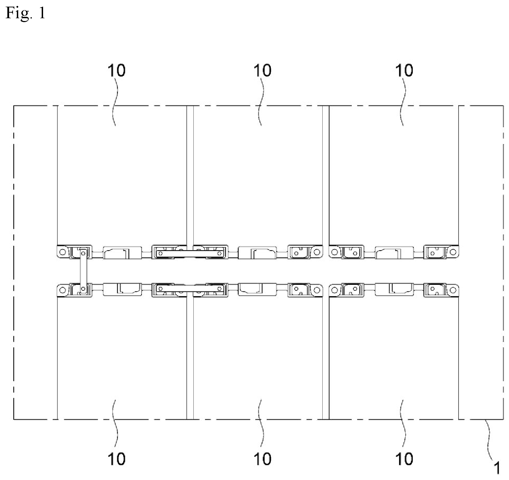

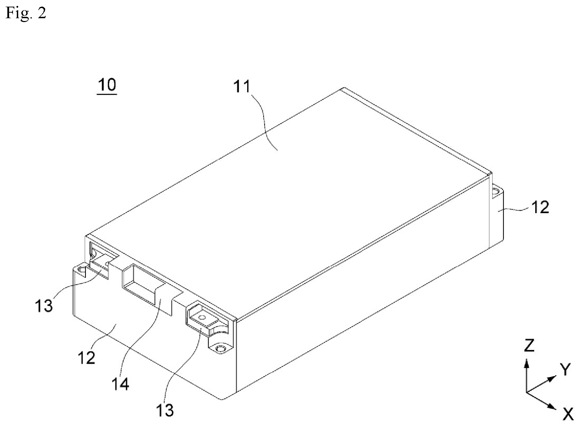

FIG. 1 is a view illustrating a state where battery modules are arranged in series and in parallel inside a general battery pack, and FIG. 2 is a perspective view illustrating a battery module in the related art.

As illustrated in FIG. 1, a plurality of battery modules 10 may be connected in series and in parallel to form one battery pack 1.

In this way, when the plurality of battery modules 10 are included inside the battery pack 1, the battery pack 1 may be vulnerable to a thermal chain reaction between the battery modules 10.

For example, when an event such as a thermal runaway occurs inside one of the battery modules 10, the thermal runaway needs to be prevented from being transited to the other battery modules 10.

In a case where the transition of the thermal runaway between the battery modules 10 is not prevented, an event occurring in a specific battery module 10 may cause a chain reaction in multiple battery modules 10, thereby resulting in explosion or fire.

In particular, in a case where an event such as the thermal runaway occurs in one of the battery modules 10, a flame may be ejected outward.

In this case, when the flame ejection is not properly controlled, the flame may be ejected toward the other battery modules 10, thereby causing a high possibility that a thermal chain reaction occurs in the other battery modules 10.

In a case of the battery module 10, as illustrated in FIG. 2, a configuration may be configured in a form in which an upper portion, a lower portion, a left side, and a right side around a cell assembly accommodated inside the battery cell 19 are surrounded by a main body frame 11, and a front side and a rear side are surrounded by an end frame 12.

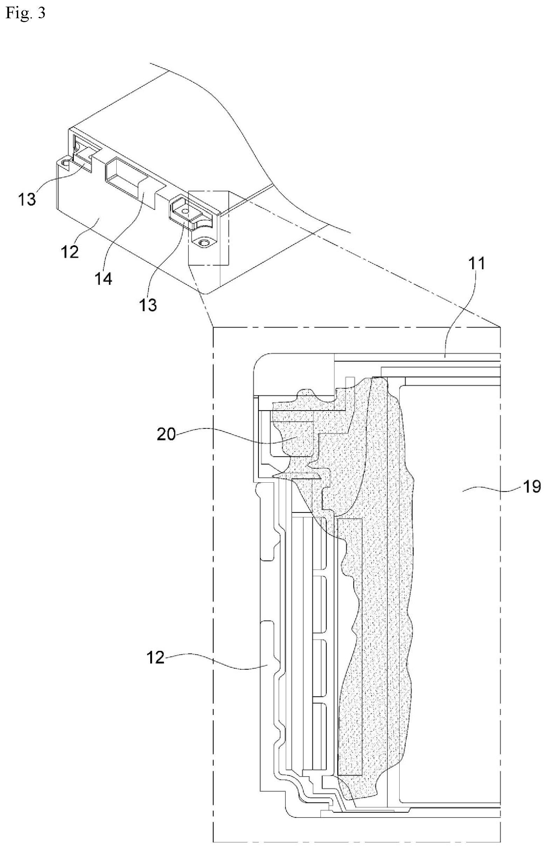

FIG. 3 is a view illustrating a state where the flame is ejected to the vicinity of a terminal which is an open area, during the thermal runaway of a pouch cell inside the battery module in the related art.

In a case of the battery module 10 in the related art, as illustrated in FIG. 3, in a situation where the thermal runaway occurs internally, the flame 20 cannot be completely blocked, and there is a very high possibility that the flame 20 is exposed outward.

In particular, in many cases, a typical battery module may be provided in a form in which a terminal 13 for supplying and charging electric energy and a connector 14 for sensing a voltage or a temperature are exposed outward.

In order to expose the terminal 13 or the connector 14 outward, a hole needs to be formed in the end frame 12, and due to tolerance, a gap may be formed between this hole and the terminal 13 or the connector 14, thereby resulting in a risk that the flame 20 or a spark is ejected outward.

Furthermore, the vicinity of the terminal 13 or the connector 14 may be wrapped with an electrically insulating injection molding material to ensure an insulating distance from other portions or watertightness.

However, in a situation such as the thermal runaway, there is a high risk that the flame 20 is ejected toward a side of the terminal 13 or the connector 14. When exposed to a gas and heat, the insulating injection molding material may melt, and a portion where the insulating injection molding material is located may be left as an empty space.

This empty space may serve as a passageway through which a large amount of the flame 20 is ejected, a thermal runaway situation may be transited to the other battery modules, or may cause an outbreak of fire in other external components.

In addition, this empty space may become a passage through which outside air flows into the terminal 13 or the connector 14.

Therefore, there is a possibility that the battery module suffers the outbreak of fire or a scale of the fire is increased.

### [DETAILED DESCRIPTION OF INVENTION]

### [TECHNICAL PROBLEMS]

The present disclosure has been made to solve various problems in the related art as described above, and an object of the present disclosure is to provide a battery module and a battery pack including the same for preventing a thermal runaway of a pouch cell inside the battery module from being transited to an adjacent battery module when the pouch cell experiences the thermal runaway and a flame is ejected to the vicinity of a terminal or to the vicinity of a connector which is an open area.

### [TECHNICAL SOLUTION]

According to the present disclosure, in order to achieve the above-describe objects, there is provided a battery module including a cell assembly, the cell assembly including a plurality of battery cells; a connector connected to the cell assembly; a terminal connected to the connector; a main body configured to accommodate the cell assembly, the main body frame including a first side, a second side, the first side and the second side being located at longitudinal ends of the main body frame, an opening portion located on at least one of the first side and the second side; an end frame coupled to the opening portion of the main body frame, the end frame having an open area configured such that the terminal and the connector are partially exposed outward; and a foamable intumescent coating is located on a surface of the end frame adjacent to the terminal and the connector, the foamable intumescent coating being configured to foam due to heat when a flame reaches the open area during a thermal runaway of at least one the plurality of battery cells to close the open area by the foam.

The battery module further include a film in a mesh shape, the film being attached to a surface of the end frame adjacent to the terminal and the connector and having a plurality of through-holes, wherein the foamable intumescent coating may be located on the film.

In this case, the through-holes may be located at a predetermined interval over an entire surface of the film.

In addition, a shape of the through-hole may be a circular shape or a polygonal shape.

As another embodiment, a plurality of linear protruding portions may be located parallel to each other on the surface of the end frame adjacent to the terminal and the connector, and the foamable intumescent coating may be located on the surface of the end frame including the plurality of protruding portions.

As still another embodiment, a plurality of grooves having a predetermined shape may be located on the surface of the end frame adjacent to the terminal and the connector, and the foamable intumescent coating may be located on the surface of the end frame including the plurality of grooves.

As still another embodiment, a plurality of projections having a predetermined shape may be located on the surface of the end frame adjacent to the terminal and the connector, and the foamable intumescent coating may be located on the surface of the end frame including the plurality of projections.

Meanwhile, the battery pack according to the present disclosure includes the battery module.

Specific details of other embodiments are included in the "detailed description of invention" and the accompanying "drawings".

Advantages and/or features of the present disclosure, and methods for achieving the advantages and/or features of the present disclosure will become apparent with reference to various embodiments described below in detail together with the accompanying drawings.

However, the present disclosure is not limited to the respective embodiments disclosed below, and may be realized in various different forms. The respective embodiments disclosed in the present specification are provided only to make the disclosure of the present disclosure complete, and to fully address the scope of the present disclosure to those skilled in the art to which the present disclosure pertains. It should be noted that the present disclosure is defined only by the appended claims.

### [EFFECT OF INVENTION]

According to the solution to the above-described problem, the present disclosure has the following advantageous effects.

The present disclosure provides an advantageous effect as follows. The foamable intumescent coating is applied to the surface of the end frame which is adjacent to the terminal and the connector. In this manner, when the flame is emitted to the vicinity of the terminal or the vicinity of the connector which is an open area, during the thermal runaway of the battery cell inside the main body frame of the battery module, the foamable intumescent coating is foamed due to heat. Accordingly, the foaming material may block air flowing into the main body frame, and may block the flame emitted outward of the main body frame.

Accordingly, a heat-insulating effect and a combustion delay effect may be provided to delay transition of the thermal runaway to the adjacent battery module.

Furthermore, the present disclosure provides an advantageous effect as follows. A mesh-shaped film is attached to the surface of the end frame which is adjacent to the terminal and the connector. Thereafter, the foamable intumescent coating is applied onto the film. In this manner, a form of a char layer generated by exposing the intumescent coating to the flame may be maintained.

In addition, the present disclosure provides an advantageous effect as follows. A mesh-shaped film is attached to the surface of the end frame which is adjacent to the terminal and the connector, or the linear protruding portion, the groove, or the projection are formed to have an irregular surface. In this manner, an application property (adhesion) of the foamable intumescent coating may be improved, and an application amount of the foamable intumescent coating may be maximized.

### [BRIEF DESCRIPTION OF THE DRAWING]

FIG. 1 is a view illustrating a state where battery modules are arranged in series and in parallel inside a general battery pack.
FIG. 2 is a perspective view illustrating a battery module in the related art.
FIG. 3 is a view illustrating a state where a flame is ejected to the vicinity of a terminal which is an open area, during a thermal runaway of a pouch cell inside the battery module in the related art.
FIG. 4 is a perspective view illustrating an outer surface of an end frame, illustrating a state where a mesh film is attached to a terminal adjacent area and a connector adjacent area of an end frame in a battery module according to the present disclosure.
FIG. 5 is a view illustrating a state where an intumescent coating is applied to the mesh film in FIG. 4.
FIG. 6 is a perspective view illustrating an inner surface of the end frame, illustrating a state where the mesh film to which the intumescent coating is applied is attached to the terminal adjacent area and the connector adjacent area of the end frame in the battery module according to the present disclosure.
FIG. 7 is a view illustrating a state where a plurality of linear protruding portions are formed parallel to each other on an entire surface of the terminal adjacent area and an entire surface of the connector adjacent area of the end frame in the battery module according to the present disclosure.
FIG. 8 is a view illustrating a state where a plurality of grooves are formed at a predetermined interval on the entire surface of the terminal adjacent area and the entire surface of the connector adjacent area of the end frame in the battery module according to the present disclosure.
FIG. 9 is a view illustrating a state where a plurality of projections are formed at a predetermined interval on the entire surface of the terminal adjacent area and the entire surface of the connector adjacent area of the end frame in the battery module according to the present disclosure.
FIG. 10 is a view for describing a state where the intumescent coating is foamed due to heat when the flame is ejected to the vicinity of a terminal which is an open area, during the thermal runaway of a pouch cell inside the battery module according to the present disclosure.
FIG. 11 is a view for describing an example in which the intumescent coating is foamed due to the heat such that a foaming material blocks an inflow of air and blocks the flame emitted outward of the battery module, when the flame is emitted to the vicinity of the terminal which is the open area, during the thermal runaway of the pouch cell inside the battery module according to the present disclosure.

### [BEST MODE FOR CARRYING OUT THE INVENTION]

Advantages and features of the present disclosure, and methods for achieving the advantages and features of the present disclosure will become apparent by referring to embodiments described below in detail together with the accompanying drawings. However, the present disclosure is not limited to the embodiments disclosed below, and may be realized in various different forms. The present embodiments are provided only to make the disclosure of the present disclosure complete, and to fully address the scope of the invention to those skilled in the art to which the present disclosure pertains. The present disclosure is defined only by the appended claims. Therefore, in some embodiments, well-known process steps, well-known device structures, and well-known techniques are not specifically described in order to avoid ambiguity in the interpretation of the present disclosure. The same reference numerals refer to the same elements throughout the specification.

In order to clearly represent multiple layers and regions in the drawings, a thickness may be enlarged. The same reference numerals are assigned to similar elements throughout the specification. When it is described that one element such as a layer, a film, a region, or a plate is located "over" another element, this description includes not only a case where one element is located "directly over" another element, but also a case where still another element is located therebetween. Conversely, when it is described that one element is located "directly over" another element, this description means that no other element is located therebetween. In addition, when it is described that one element such as the layer, the film, the region, or the plate is located "below" another element, this description includes not only a case where one element is located "directly below" another element, but also a case where still another element is located therebetween. Conversely, when it is described that one element is located "directly below" another element, this description means that no other element is located therebetween.

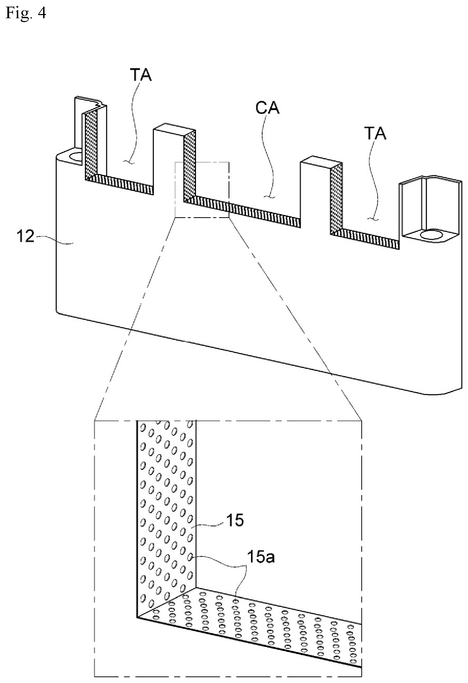

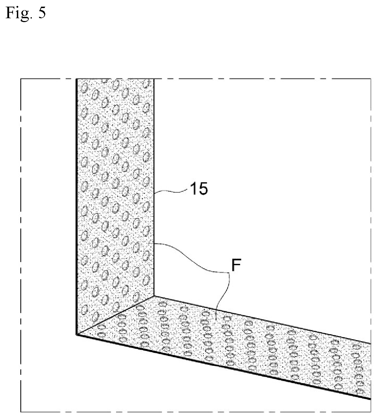

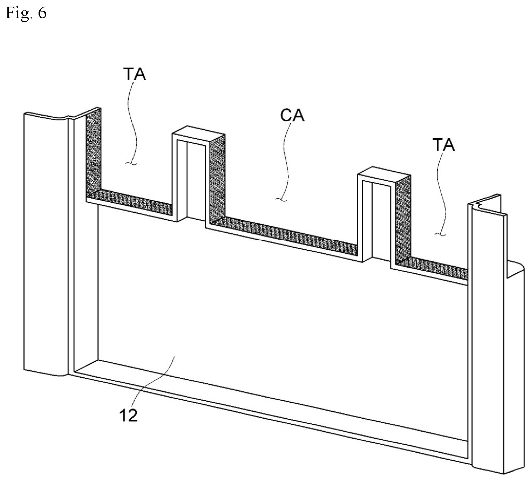

FIG. 4 is a perspective view illustrating a state where the mesh film is attached to the terminal adjacent area and the connector adjacent area of the end frame in the battery module according to the present disclosure, and is a view illustrating an outer surface of the end frame. FIG. 5 is a view illustrating a state where the intumescent coating is applied to the mesh film in FIG. 4, and FIG. 6 is a perspective view illustrating a state where the mesh film to which the intumescent coating is applied is attached to the terminal adjacent area and the connector adjacent area of the end frame in the battery module according to the present disclosure, and is a view illustrating an inner surface of the end frame.

A battery module 10 according to the present disclosure includes a cell assembly, a main body frame 11, and an end frame 12.

The cell assembly is formed by stacking a plurality of battery cells, and may generate electrical energy.

The battery cell of the cell assembly formed in this way is a basic secondary battery that serves as a unit for charging and discharging, and may be configured in various forms.

For example, each of the battery cells may include a pouch-type secondary battery, a cylindrical secondary battery, or a square secondary battery.

Electrode leads may be formed in both end portions or in one end portion of each of the battery cells.

The plurality of battery cells may be electrically connected to each other in series and/or in parallel through the electrode leads.

In this case, the electrode leads of each of battery cells may be directly connected by coming into contact with each other, or may be indirectly connected through a busbar or the like.

The main body frame 11 has a predetermined length and width, and has an internal space surrounded by a plurality of surfaces. The cell assembly is accommodated in this internal space.

In addition, an opening portion communicating with the internal space is formed on at least one side of both sides in a longitudinal direction of the main body frame 11.

The end frame 12 is coupled to the opening portion of the main body frame 11.

An open area is formed in the end frame 12 such that a terminal 13 and a connector 14 are partially exposed outward.

The terminal 13 is a portion for connecting the battery module 10 to other external elements, for example, such as another battery module 10 or a pack terminal, and is a terminal through which charging and discharging power flows.

The terminal 13 may be connected to the electrode lead of the battery cell.

The terminal 13 may be made of an electrically conductive material, for example, a metal material such as copper, aluminum, and nickel.

In the end frame 12, an open area is formed at a position corresponding to the terminal 13 (area TA adjacent to the terminal) such that the terminal 13 is exposed outward.

The connector 14 may be configured to transmit and receive information between internal components and external components of the battery module 10.

For example, a control unit such as a battery management system (BMS) may be provided outside the battery module 10.

In this case, the BMS may be connected to the connector 14, and may collect information on a voltage or a current of the cell assembly, a temperature inside or outside the battery module, and the like.

In the end frame 12, an open area is formed at a position corresponding to the connector 14 (area CA adjacent to the connector) such that the connector 14 is exposed outward.

According to the present disclosure, a foamable intumescent coating F may be applied to a surface of the end frame 12 (each surface forming the open area) which is adjacent to the terminal 13 and the connector 14.

Accordingly, when the flame reaches the open area during the thermal runaway of the battery cell inside the main body frame 11, the intumescent coating F is foamed, and a foaming material 30 formed in this way closes the open area. In this manner, a flow of the air into the main body frame 11 may be blocked, and the flame 20 ejected outward of the main body frame 11 may be blocked.

In another configuration, according to the present disclosure, a mesh-shaped film 15 having a plurality of through-holes 15a may be attached to a surface of the end frame 12 (surface forming the open area) which is adjacent to the terminal 13 and the connector 14, and the foamable intumescent coating F may be applied to this film 15.

The through-holes 15a of the mesh-shaped film 15 enable a larger amount of the foamable intumescent coating F to be settled on the film 15.

In this case, a double-sided tape may be attached or an adhesive agent may be applied to the surface of the end frame 12 to which the mesh-shaped film 15 is attached.

In addition, it is preferable that the through-holes 15a formed in the film 15 are formed at a predetermined interval over the entire surface of the film 15.

In addition, a shape of the through-hole 15a may be formed in a circular shape or a polygonal shape. For example, the through-hole may be formed in a square shape or a hexagonal shape.

It is preferable that the mesh-shaped film 15 is made of a material having sufficient rigidity. The reason is that the film 15 maintains a stiff form to maintain a forms of the foamable intumescent coating F formed by foaming of the foaming material 30.

The mesh-shaped film 15 is attached to the surface 14 of the end frame 12 (surface forming the open area) which is adjacent to the terminal 13 and the connector. Thereafter, the foamable intumescent coating F is applied onto the film 15. In this manner, a form of a char layer generated by exposing the intumescent coating F to the flame 20 may be maintained.

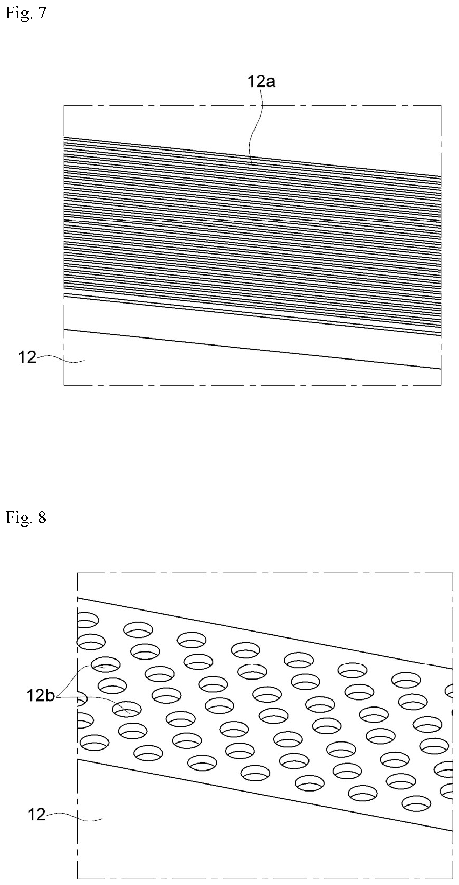

FIG. 7 is a view illustrating a state where a plurality of linear protruding portions are formed parallel to each other on the entire surface of the terminal adjacent area and the connector adjacent area of the end frame in the battery module according to the present disclosure.

Without attaching a mesh-shaped film to the surface of the end frame 12 (surface forming the open area) which is adjacent to the terminal 13 and the connector 14, the plurality of linear protruding portions 12a may be formed parallel to each other on the surface of the end frame 12 which is adjacent to the terminal 13 and the connector 14.

For example, these protruding portions 12a may be formed in a transverse direction, a longitudinal direction, a diagonal direction, or a mixed direction thereof.

In this case, it is preferable to form heights of the plurality of protruding portions 12a to be the same.

In this way, the linear protruding portion 12a may be formed on the surface of the end frame 12 which is adjacent to the terminal 13 and the connector 14, and thereafter, the foamable intumescent coating F may be applied to the surface of the end frame 12 including the protruding portion 12a. A larger amount of the foamable intumescent coating F may be stably settled between the protruding portions 12a adjacent to each other.

FIG. 8 is a view illustrating a state where a plurality of grooves are formed at a predetermined interval on the entire surface of the terminal adjacent area and the connector adjacent area of the end frame in the battery module according to the present disclosure.

Without attaching the mesh-shaped film to the surface of the end frame 12 (surface forming the open area) which is adjacent to the terminal 13 and the connector 14, a plurality of grooves 12b having a predetermined shape may be formed on the surface of the end frame 12 which is adjacent to the terminal 13 and the connector 14.

For example, these grooves 12b may be circular grooves, may be polygonal grooves, may be both the circular grooves and the polygonal grooves, or may be both n-polygonal grooves and m-polygonal grooves (here, n and m represent numbers).

In this case, it is preferable to form depths of grooves 12b to be the same.

In this way, the predetermined grooves 12b may be formed on the surface of the end frame 12 which is adjacent to the terminal 13 and the connector 14, and thereafter, the foamable intumescent coating F may be applied to the surface of the end frame 12 including the groove 12b.

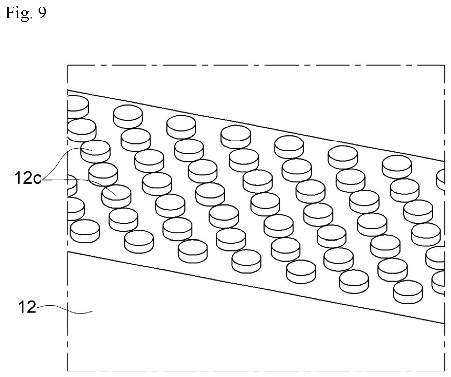

FIG. 9 is a view illustrating a state where a plurality of projections are formed at a predetermined interval on the entire surface of the terminal adjacent area and the connector adjacent area of the end frame in the battery module according to the present disclosure.

Without attaching the mesh-shaped film to the surface of the end frame 12 (surface forming the open area) which is adjacent to the terminal 13 and the connector 14, a plurality of projections 12c having a predetermined shape may be formed on the surface of the end frame 12 which is adjacent to the terminal 13 and the connector 14.

For example, this projection 12c may be formed as a projection having a disk shape, a polygonal plate shape including a square plate shape, and may also be formed by combining the projection having the disk shape and the projection having the polygonal plate shape.

In this case, it is preferable to form the heights of projections 12c to be the same.

In this way, the projections 12c may be formed on the surface of the end frame 12 which is adjacent to the terminal 13 and the connector 14, and thereafter, the foamable intumescent coating F may be applied to the surface of the end frame 12 including the projection 12c. A larger amount of the foamable intumescent coating F may be stably settled between the projections 12c adjacent to each other.

As described above, the present disclosure has an advantage of improving an application property (adhesion) of the foamable intumescent coating F and maximizing an application amount of the foamable intumescent coating F by attaching the mesh-shaped film 15 to the surface of the end frame 12 which is adjacent to the terminal 13 and the connector 14, or by forming the linear protruding portion 12a, the groove 12b, or the projection 12c to have an irregular surface.

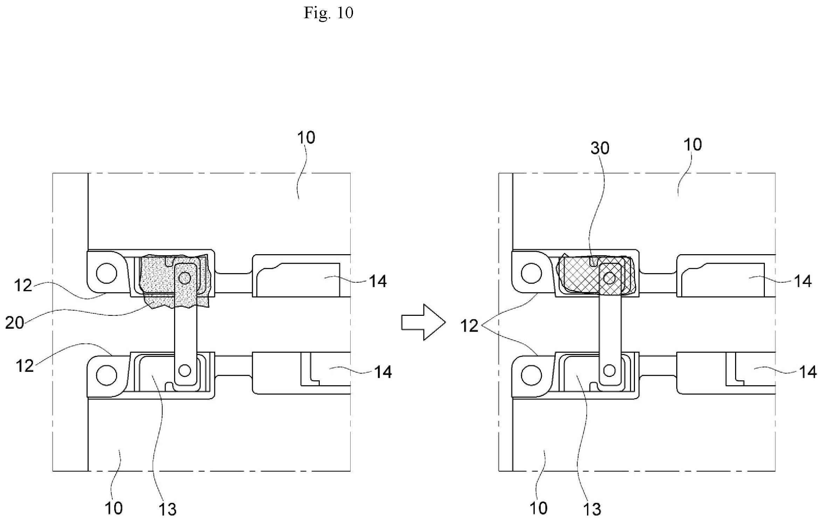

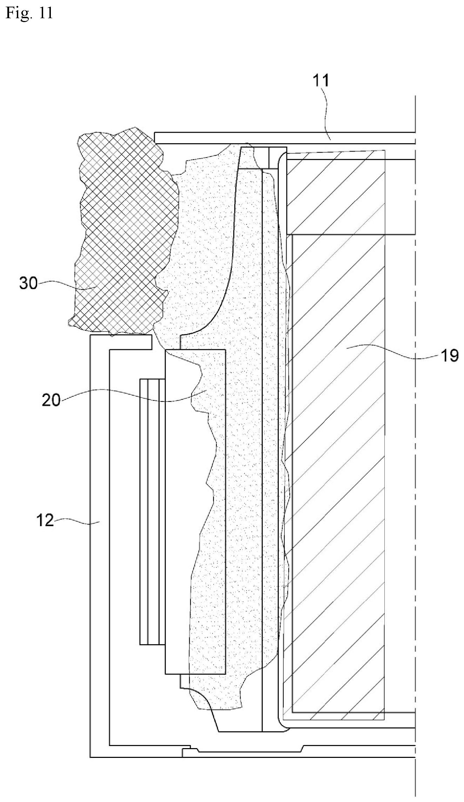

FIG. 10 is a view for describing a state where the intumescent coating is foamed due to the heat when the flame is ejected to the vicinity of the terminal which is the open area, during the thermal runaway of the pouch cell inside the battery module according to the present disclosure, and FIG. 11 is a view for describing a state where the intumescent coating is foamed due to the heat such that the foaming material blocks an inflow of the air and blocks the flame emitted outward of the battery module, when the flame is ejected to the vicinity of the terminal which is the open area, during the thermal runaway of the pouch cell inside the battery module according to the present disclosure, and the foaming material blocks the inflow of air and blocks the flame ejected outside the battery module.

When the plurality of battery modules 10 are included inside the battery pack 1, the battery pack 1 may be vulnerable to a thermal chain reaction between the battery modules 10.

For example, when the flame 20 is emitted due to the thermal runaway inside one of the battery modules 10, the flame 20 may be transited to the other battery modules 10.

In the present disclosure, the mesh-shaped film 15 is attached to the surface of the end frame 12 which is adjacent to the terminal 13 and the connector 14, or the linear protruding portion 12a, the groove 12b, or the projection 12c is formed to have the irregular surface. Thereafter, the foamable intumescent coating F is applied to the surface of the end frame 12 which is adjacent to the terminal 13 and the connector 14. In this manner, when the flame 20 is ejected due to the thermal runaway inside any one of the battery modules 10, the applied intumescent coating F expands due to the heat, and the foaming material 30 expanded and generated in this way closes the open area of the end frame 12 adjacent to each of the terminal 13 and the connector 14.

Accordingly, the foaming material 30 blocks the inflow of the air into the battery module 10, and simultaneously blocks the flame 20 ejected outward of the battery module 10.

In this way, a heat-insulating effect and a combustion delay effect are provided to delay transition of the thermal runaway to the adjacent battery module 10.

The present disclosure described above is not limited to the above-described embodiments and the accompanying drawings, and it will be apparent to those skilled in the art to which the present disclosure pertains that various substitutions, modifications, and changes are possible within the scope not departing from the technical idea of the present disclosure.

### [DESCRIPTION OF REFERENCE NUMERALS]

1: battery pack
10: battery module
11: main body frame
12: end frame
TA: terminal adjacent area
CA: connector adjacent area
12a: linear protruding portion
12b: groove
12c: projection
13: terminal
14: connector
15: mesh film
15a: through-hole
19: battery cell
F: foamable intumescent coating
20: flame
30: foaming material

## Claims

1. A battery module comprising:
a cell assembly, the cell assembly including a plurality of battery cells;
a connector connected to the cell assembly;
a terminal connected to the connector;
a main body frame, the main body frame being configured to accommodate the cell assembly, the main body frame including:
a first side;
a second side, the first side and the second side being located at longitudinal opposite ends of the main body frame; and
an opening portion located on at least one of the first side and the second side; and
an end frame coupled to the opening portion of the main body frame, the end frame having an open area configured such that the terminal and the connector are partially exposed outward; and
a foamable intumescent coating located on a surface of the end frame adjacent to the terminal and the connector, the foamable intumescent coating being configured to foam due to heat when a flame reaches the open area during a thermal runaway of at least one of the plurality of battery cells to close the open area by the foam.

2. The battery module of claim 1, further comprising a film in a mesh shape, the film being attached to the surface of the end frame adjacent to the terminal and the connector, the film having a plurality of through-holes,
wherein the foamable intumescent coating is located on the film.

3. The battery module of claim 2, wherein the through-holes are located at a predetermined interval over an entire surface of the film.

4. The battery module of claim 3, wherein a shape of the through-hole is a circular shape or a polygonal shape.

5. The battery module of claim 1, further comprising a plurality of linear protruding portions located parallel to each other, the plurality of linear protruding portions being located on the surface of the end frame adjacent to the terminal and the connector,
wherein the foamable intumescent coating is located on the surface of the end frame including the plurality of linear protruding portions.

6. The battery module of claim 1, further comprising a plurality of grooves having a predetermined shape, the plurality of grooves being located on the surface of the end frame adjacent to the terminal and the connector,
wherein the foamable intumescent coating is located on the surface of the end frame including the plurality of grooves.

7. The battery module of claim 1, further comprising a plurality of projections having a predetermined shape, the plurality of projections being located on the surface of the end frame adjacent to the terminal and the connector,
wherein the foamable intumescent coating is located on the surface of the end frame including the plurality of projections.

8. A battery pack comprising the battery module of claim 1.
